# EUROPEAN PATENT SPECIFICATION

(11) **EP 3 071 922 B1**
(45) Date of publication and mention of the grant of the patent: **16.01.2019**
(21) Application number: 14866796.7
(22) Date of filing: 17.11.2014
(51) Int. Cl.: F41H 1/02, B32B 5/02, B32B 5/06, B32B 5/12, B32B 5/26, B32B 7/12, D06N 3/00, D06N 3/04, D06N 3/14

(54) **COMPOSITES AND BALLISTIC RESISTANT ARMOR ARTICLES CONTAINING THE COMPOSITES**
VERBUNDSTOFFE UND KUGELSICHERE PANZERUNGSARTIKEL MIT DIESEN VERBUNDSTOFFEN
COMPOSITES ET OBJETS DE BLINDAGE RÉSISTANT AUX BALLES CONTENANT LES COMPOSITES

(30) Priority: 18.11.2013 EP 13425150
(43) Date of publication of application: 28.09.2016
(73) Proprietor: E. I. du Pont de Nemours and Company, Wilmington, DE 19805 (US); Società per Azioni Fratelli Citterio, 20900 Monza (MB) (IT)
(72) Inventor: BADER, Yves, F-01170 Crozet (FR); CITTERIO, Filippo, I-20900 Monza (IT); CITTERIO, Giorgio Celeste, I-20900 Monza (IT)
(74) Representative: Dannenberger, Oliver Andre
(86) International application number: PCT/US2014/065907
(87) International publication number: WO 2015/119696

(56) References cited:
- WO-A1-2012/016046
- WO-A1-2012/145051
- Baxenden Chemicals Ltd: "Urethane Surface Coatings - Blocked Isocyanates Urethane Surface Coatings - Blocked Isocyanates", , 21 November 2012 (2012-11-21), XP055200006, Retrieved from the Internet: URL:http://www.baxchem.co.uk/files/documen ts/Baxenden_BlockedISO.pdf.pdf [retrieved on 2015-07-03]

## Description

### BACKGROUND OF THE INVENTION

### 1. Field of the Invention

This invention relates to composites and ballistic resistant armor articles containing the composites. The composites comprise layers of high tenacity yarns.

### 2. Description of Related Art

United States patent 6,990,886 to Citterio discloses an unfinished multilayer structure used to produce a finished multilayer anti-ballistic composite. The unfinished multilayer structure includes a first layer of threads parallel with each other, superimposed, with the interpositioning of a binding layer on at least a second layer of threads which are parallel with each other.
The threads of the first layer are set in various directions with respect to the threads of the second layer. The two layers are also joined by binding threads made of a thermoplastic or thermosetting material or of a material which is water-soluble or soluble in a suitable solvent.

PCT patent application publication number 2012/145051 to Chiou et al discloses a coated fabric suitable for use in an anti-ballistic article comprising a fabric comprising at least a first layer of high tenacity yarns such as para- aramid arranged parallel with each other and at least a second layer of high tenacity yarns arranged parallel with each other, the yarns of the first layer having an orientation in a direction that is different from the orientation of the yarns in the second layer, a fluoropolymer, a viscoelastic resin and a thermoset or thermoplastic binding layer, the binding layer being positioned between the first and second layers of yarns. A method of making the surfactant free coated fabric using a non-polar organic solvent is also disclosed.

United States patent 5,229,199 to Miner et al teaches a rigid composite comprising a polyester, phenolic, or polyamide resin matrix reinforced with woven fabric of continuous p-aramid filaments coated with from about 0.2 to 5 percent, by weight, of a solid adhesion modifier which reduces the adhesion between said resin matrix and said p-aramid filaments embedded therein, said adhesion modifier selected from the group consisting of a 2-perfluoroalkylethyl ester, a paraffin wax and a combination thereof.

European patent application number 1 396 572 A1 pertains to a method of producing a waterproof aramid fabric for antiballistic applications by treating aramid yarn with waterproofing agent, drying the yarn, making woven fabric from the yarn and heating the woven fabric.

There is an ongoing need to provide multilayer ballistic resistant structures for body armor that will provide, without detriment to ballistic resistance, enhanced water repellency and flexibility.

### BRIEF SUMMARY OF THE INVENTION

This invention is directed to a composite useful in a ballistic resistant armor article, comprising:
(a) from 70.0 to 90.0 weight percent of a first unidirectional layer comprising aromatic polyamide yarns or aromatic copolyamide yarns comprising continuous filaments, yarns arranged parallel with each other plus a second unidirectional layer comprising aromatic polyamide yarns or aromatic copolyamide yarns comprising continuous filaments, the yarns arranged parallel with each other, the yarns of the first layer having an orientation in a direction that is different from the orientation of the yarns in the second layer, wherein the yarns have a yarn tenacity of 10 to 65 grams per dtex and an elongation at break of 3.0 to 5.0 percent,
(b) from 3.0 to 12.0 weight percent of a thermoset or thermoplastic binding resin positioned between the first and second unidirectional layers and coating at least portions of internal surfaces of the first plurality and the second plurality of yarns and filling some space between the filaments in the first plurality and the second plurality of yarns in the region of the interface between the two layers, and
(c) from 6.0 to 10.0 weight percent of a coating on at least portions of external surfaces of the first plurality and the second plurality of yarns and filling some space between the filaments in the first plurality and the second plurality of yarns,
wherein
(i) the weight percentages of (a), (b) and (c) are expressed relative to the total weight of the composite,
(ii) a ratio of a maximum thickness of the first or second layer to an equivalent diameter of the filaments in the first or second layer, respectively, is at least 13, and
(iii) the coating comprises
   - a viscoelastic resin comprising from 40 to 70 weight percent of the coating
   - an aqueous based fluoropolymer comprising up to 40 weight percent of the coating, and
   - a blocked isocyanate comprising from 10 to 20 weight percent of the coating.

### BRIEF SUMMARY OF THE DRAWINGS

FIG 1 shows a plan view in perspective of a composite used to produce a ballistic resistant armor article.
FIG 2 shows a sectional view taken at 2-2 in Figure 1.

### DETAILED DESCRIPTION OF THE INVENTION

The composite comprises a fabric and a coating on the external surfaces of the fabric that partially impregnates into the fabric.

### 1. Fabric

The fabric of this invention is a unidirectional fabric. Further described herein is a woven fabric, a multiaxial fabric or a nonwoven fabric. A woven fabric, a unidirectional fabric and a multiaxial fabric comprise yarns of continuous filaments. A multiaxial fabric may also comprise a nonwoven fabric. In the context of this invention, a nonwoven fabric is a fabric comprising randomly oriented short fibers. An example of a nonwoven fabric is a felt. Examples of woven fabrics are plain weaves, satin weaves, crowsfoot weaves, basket weaves, leno weaves and twill weaves.

A unidirectional fabric is a fabric wherein all the yarns within one layer of the fabric are aligned in one direction. A multiaxial fabric is a non-crimped fabric comprising a plurality of unidirectional fabric layers wherein the yarn orientation between successive layers is in a different direction. Common multiaxial fabrics comprise two, four or six layers. United States patent 6,000,055 to Citterio describes a multiaxial layer suitable for use in a ballistic resistant article.

Pluralities of adjacent unidirectional fabric layers are held together by a polymeric bonding substrate placed between the adjacent layers. In some embodiments, a combination of both transverse yarn stitching through the plane of the unidirectional layers and a polymeric bonding substrate may be used. All the above fabric types are well known in the textile art.

### Unidirectional Layers

The composite comprises two unidirectional layers comprising from 70.0 to 90.0 weight percent of the composite. In some embodiments, the two unidirectional layers comprise from 75.0 to 85.0 or from 80 to 85 weight percent of the composite. The first unidirectional layer comprises a first plurality of first yarns, the yarns being arranged parallel with each other. The second unidirectional layer comprises a second plurality of second yarns, the yarns being arranged parallel with each other.

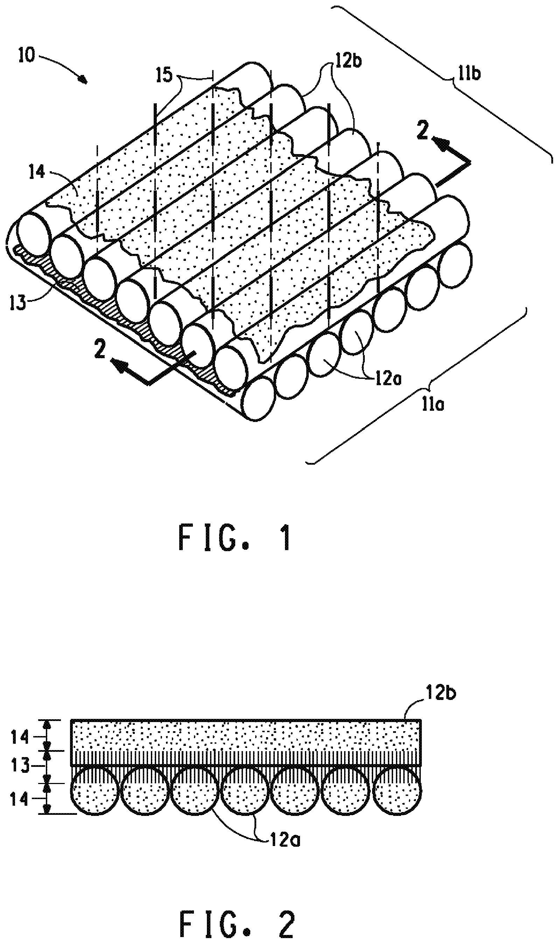

The orientation of yarns in the first unidirectional layer of the composite is different from the orientation of yarns in the second unidirectional layer. FIG 1 shows generally at 10, a composite comprising two unidirectional layers 11a and 11b of reinforcement yarns 12a and 12b. The orientation of the first plurality of yarns 12a in the first layer 11a of the composite is different from the orientation of the second plurality of yarns 12b in the second layer 11b. As an example, the orientation of yarns in a first layer may be at zero degrees i.e. in the machine direction while the yarns in a second layer may be oriented at an angle of 90 degrees with respect to the orientation of yarns in the first layer. The machine direction is the long direction within the plane of the composite, that is, the direction in which the composite is produced. Examples of other orientation angles are + 45 degrees and -45 degrees with respect to the machine direction. In a preferred embodiment the yarns in successive layers of the unidirectional composite are oriented at zero degrees and 90 degrees with respect to each other. Other embodiments include other cross ply angles between the yarns in adjacent layers.

Each unidirectional layer has a basis weight of from 30 to 1000 gsm or even from 30 to 800 g/m². In some preferred embodiments the basis weight of each layer is from 45 to 500 g/m² .In some other embodiments the basis weight of each layer is from 55 to 300 g/m². In yet some other embodiments, the fibrous layers of the composite all have the same nominal basis weight.

### The Yarns

The yarns preferably have a yarn tenacity of from 10 to 65 grams per dtex and a modulus of from 400 to 3000 grams per dtex. Further, the yarns have a linear density of from 100 to 3,500 dtex and an elongation to break of from 2.0 to 5.0 percent, preferably 3.0 to 5.0 percent. In one embodiment, the yarns have a linear density of from 300 to 1800 dtex and a tenacity of from 24 to 50 grams per dtex. In still some other embodiments, the yarns have a linear density of from 100 to 1200 dtex with a range of from 400 to 1000 dtex being especially useful. In a further embodiment, the yarns have an elongation to break of from 3.2 to 4.5 percent. A finished yarn may also be made by assembling or roving together two precursor yarns of lower linear density. For example two precursor yarns each having a linear density of 850 dtex can be assembled into a finished yarn having a linear density of 1700 dtex.

Both untwisted and twisted yarns may be used. Untwisted yarns are preferred because they offer higher ballistic resistance than twisted yarns and because they spread to a wider aspect ratio than twisted yarns, enabling more consistent fiber coverage across the layer.

In some embodiments, the yarns used in the layers form a substantially flattened array of filaments wherein individual yarn bundles are difficult to detect. In such an embodiment, the filaments are uniformly arranged in the layer, meaning there is less than a 20 percent difference in the thickness of the flattened array. The filaments from one yarn shift and fit next to adjacent yarns, forming a continuous array of filaments across the layer.

In an alternative embodiment, the yarns can be positioned such that small gaps are present between the flattened yarn bundles, or the yarns may be positioned such that the yarn bundles butt up against other bundles, while retaining an obvious yarn structure. In other embodiments, the first and the second plurality of filaments are present in the first and the second plurality of layers as substantially distinct yarns.

It is believed the use of yarns having an elongation at break of from 3.0 to 5.0 percent allows for the use of thicker layers in the composite without an appreciable loss in ballistic performance. A composite comprising at least two unidirectional layers having a ratio of the thickness of any one layer to the equivalent diameter of the filaments comprising the layer of at least 13, in conjunction with the yarns comprising the layer having an elongation to break of from 3.0% to 5.0% and a tenacity of at least 24 grams per dtex, allows a finished article to be assembled with fewer layers and yet still meet performance requirements. This offers productivity and quality improvements in the assembly process.

The ratio of the thickness of any layer to the equivalent diameter of the filaments comprising the layer is at least 13, more preferably at least 16 and most preferably at least 19. By "equivalent diameter" of a filament we mean the diameter of a circle having a cross-sectional area equal to the average cross-sectional area of the filaments comprising the layer. The ratio is calculated by first determining the thickness of a layer in the composite, typically by measuring the average thickness of the final composite and dividing by the number of layers, and then dividing by the equivalent diameter of a filament used in a layer. Typically, all of the layers are of the same basis weight and all of the layers have the same filaments.

### The Filaments

For purposes herein, the term "filament" is defined as a relatively flexible, macroscopically homogeneous body having a high ratio of length to width across its cross-sectional area perpendicular to its length. The filament cross section can be any shape, but is typically round or bean shaped. The yarns may also be round, bean shaped or oval in cross section. The filaments can be any length. Preferably the filaments are continuous. Multifilament yarn spun onto a bobbin in a package contains a plurality of continuous filaments. In the context of this disclosure, the terms filament and fiber may be used interchangeably.

The yarns of the present invention may be made with filaments of aromatic polyamide. A preferred aromatic polyamide is para-aramid. As used herein, the term para-aramid filaments means filaments made of para-aramid polymer. The term aramid means a polyamide wherein at least 85% of the amide (-CONH-) linkages are attached directly to two aromatic rings. Suitable aramid fibers are described in Man-Made Fibres- Science and Technology, Volume 2, in the section titled Fibre-Forming Aromatic Polyamides, page 297, W. Black et al., Interscience Publishers, 1968. Aramid fibers and their production are, also, disclosed in U.S. Patents 3,767,756; 4,172,938; 3,869,429; 3,869,430; 3,819,587; 3,673,143; 3,354,127; and 3,094,511.

A preferred para-aramid is poly (p-phenylene terephthalamide) which is called PPD-T. By PPD-T is meant the homopolymer resulting from mole-for-mole polymerization of p-phenylene diamine and terephthaloyl chloride and, also, copolymers resulting from incorporation of small amounts of other diamines with the p-phenylene diamine and of small amounts of other diacid chlorides with the terephthaloyl chloride. As a general rule, other diamines and other diacid chlorides can be used in amounts up to as much as about 10 mole percent of the p-phenylene diamine or the terephthaloyl chloride, or perhaps slightly higher, provided only that the other diamines and diacid chlorides have no reactive groups which interfere with the polymerization reaction. PPD-T, also, means copolymers resulting from incorporation of other aromatic diamines and other aromatic diacid chlorides such as, for example, 2,6-naphthaloyl chloride or chloro- or dichloroterephthaloyl chloride or 3,4'-diaminodiphenylether. In some preferred embodiments, the yarns of the composite consist solely of PPD-T filaments; in some preferred embodiments, the layers in the composite consist solely of PPD-T yarns; in other words, in some preferred embodiments all filaments in the composite are PPD-T filaments.

Additives can be used with the aramid and it has been found that up to as much as 10 percent or more, by weight, of other polymeric material can be blended with the aramid. Copolymers can be used having as much as 10 percent or more of other diamine substituted for the diamine of the aramid or as much as 10 percent or more of other diacid chloride substituted for the diacid chloride or the aramid.

Another suitable fiber is one based on aromatic copolyamide such as is prepared by reaction of terephthaloyl chloride (TPA) with a 50/50 mole ratio of p-phenylene diamine (PPD) and 3,4'-diaminodiphenyl ether (OPE). Yet another suitable fiber is that formed by polycondensation reaction of two diamines, p-phenylene diamine and 5-amino-2-(p-aminophenyl)benzimidazole with terephthalic acid or anhydrides or acid chloride derivatives of these monomers.

### Inter-Laver Binding Resin

In some embodiments, the composite has a resin rich polymeric binding layer in the region of the interface between the unidirectional layers. The binding layer may be in the form of a film, a liquid, a powder, a paste, a nonwoven fabric or a fine yarn. The fine yarn is similar to a weft or fill yarn and is positioned across the unidirectional yarn layers while lying in the same plane as the unidirectional layers. In some embodiments, the binding resin has a modulus no greater than 6500 psi. In some embodiments, the binding resin has a modulus no greater than 6500 psi, preferably less than 2000 psi. The binder resin layer is shown at 13 in Figures 1 and 2. The binding layer does not fully impregnate into the yarn bundle of a unidirectional layer but coats at least portions of the internal surfaces of the yarns in each layer in the interface region between the two unidirectional layers and fills some space between the filaments within the unidirectional layer.

The resin may be a thermoset or thermoplastic material. Suitable film materials for the binding layer include polyolefinic films, thermoplastic elastomeric films, polyester films, polyamide films, polyurethane films and mixtures thereof. Useful polyolefinic films include low density polyethylene films, high density polyethylene films and linear low density polyethylene films. The binding resin layer is present in the composite in an amount from 3.0 to 12.0 weight percent based on the total weight of the composite. In some embodiments, the binding resin layer is present in the composite in an amount from 6.0 to 10.0 weight percent based on the total weight of the composite.

The binding resin layer is applied by the steps of (i) forming a first unidirectional layer comprising a first plurality of yarns comprising a first plurality of continuous filaments, the first plurality of yarns arranged parallel with each other, (ii) positioning the first surface of the resin binding layer on one surface of the first unidirectional layer (iii) forming a second unidirectional layer comprising a second plurality of yarns comprising a second plurality of continuous filaments, the second plurality of yarns arranged parallel with each other and (iv) positioning the second unidirectional layer onto the second surface of the resin binding layer such that the orientation of yarns in the second unidirectional layer is in a direction that is different from the orientation of the yarns in the first unidirectional layer. The resin binding layer may be in a continuous form such as a film or in a discontinuous form such as a perforated film or a powder.

### Transverse Binding Yarns

In some embodiments, binding threads or yarns may be present. The threads or yarns comprise a plurality of fibers (filaments). These binding yarns, shown at 15 in Figure 1, are stitched or knitted through all the unidirectional layers from one side of the composite to the other side of the composite in a direction that is transverse (orthogonal) to the plane of the first and second unidirectional layers. This is also known as z-directional stitching. The binding yarn also stitches through the resin binding layer. Any suitable binding yarn may be used with polyester fiber, polyethylene fiber, polyamide fiber, aramid fiber, polyareneazole fiber, polypyridazole fiber, polybenzazole fiber, and mixtures thereof being particularly suited. The spacing between rows of stitches may vary depending on design requirements. The stitches may be between yarns or through yarns. In one embodiment the rows are spaced 5 mm apart.

### 2. The Coating

### First Component of the Coating - Viscoelastic Resin

The viscoelastic resin may be thermoplastic or thermoset. Suitable materials include polymers or resins in the form of a viscous or viscoelastic liquid. Preferred materials are polyolefins, in particular polyalpha-olefins or modified polyolefins, polyvinyl alcohol derivatives, polyisoprenes, polybutadienes, polybutenes, polyisobutenes, polyesters, polyacrylates, polyamides, polysulfones, polysulfides, polyurethanes, polycarbonates, polyfluoro-carbons, silicones, glycols, liquid block copolymers, polystyrene- polybutadiene-polystyrene, ethylene co-polypropylene, polyacrylics, epoxies, phenolics and liquid rubbers. Preferred polyolefins are polyethylene and polypropylene. Preferred glycols are polypropylene glycol and polyethylene glycol. A preferred copolymer is polybutadiene-co-acrylonitrile. Resin blends may also be used. Polyisobutylene and or polybutene are preferred resins. In a preferred embodiment, the resin coating does not fully impregnate the yarns. The visco-elastic resin is present in the coating in an amount of from 40 to 70 weight percent of the coating and more preferably from 44 to 67 weight percent of the coating. If the resin comprises less than 40 weight percent of the coating, then the composite has poor ballistic resistance. If the resin comprises more than 70 weight percent of the coating then water repellency properties are lost. Preferably the viscoelastic resin and thus the coating is provided as an aqueous dispersion, emulsion or solution.

### Second Component of the Coating - Fluoropolymer

Preferably the fluoropolymer is a cationic fluoroacrylate copolymer such as is available from Huntsman Textile Effects, High Point, NC under the tradename Phobol® CPC. An alternative fluoropolymer is Phobol® CPS, also available from Huntsman. The fluoropolymer is present in the coating in an amount of up to 40 weight percent of the coating and more preferably from 20 to 35 weight percent of the coating. If the fluoropolymer comprises more than 40 weight percent of the coating, then the composite has poor ballistic resistance. The fluoropolymer may be based on a perfluorinated side chain having a chain length of C₁₂, C10, C₈ or C6. In a preferred embodiment the perfluorinated side chain length is C₆.

### Third Component of the Coating - Blocked Isocyanate

Preferably the blocked isocyanate is an oxime blocked polyisocyanate such as is available from Huntsman under the tradename Phobol® XAN. The isocyanate may be cationic / nonionic. The blocked isocyanate is present in the coating in an amount of from 10 to 20 weight percent of the coating and more preferably from 11 to 18 weight percent of the coating. If the isocyanate comprises more than 20 weight percent of the coating, then the composite has poor ballistic resistance. If the isocyanate comprises less than 10 weight percent of the coating then water repellency properties are lost.

### Optional Fourth Component of the Coating - Hydrophobic Agent

A suitable hydrophobic agent is a fluorine free silicone based aqueous resin emulsion available from Huntsman under the tradename Phobotex® RSH. Preferably the hydrophobic agent is present in the coating in an amount of from 0 to 8 weight percent of the coating and more preferably from 5 to 7 weight percent of the coating. If the silicone resin comprises more than 8 weight percent of the coating, then the composite has poor ballistic resistance. This component enhances the flexibility of the composite when used in soft body armor thus making it more comfortable for the user to wear.

### Optional Fifth Component of the Coating - Polyglycol Ether Sulfate Stabilizer

In one embodiment, the polyglycol ether sulfate is an amphoteric alkyl amine polyglycol ether sulfate such as Albegal A which is available from Huntsman. Preferably the polyglycol ether sulfate is present in the coating in an amount of less than 2 weight percent of the coating.

### Application of the Coating to the Unidirectional Layers

A preferred method for applying the coating to the yarn layers comprises, in order, the steps of
(a) coating and impregnating a composite comprising a first layer of yarns arranged parallel with each other and a second layer of yarns arranged parallel with each other, a binding film positioned between the first and second yarn layers of yarns and a binding thread interlaced transversely with the layers to hold layers together, the yarns of the first layer having an orientation in a direction that is different from the orientation of the yarns in the second layer, with an aqueous coating solution wherein the coating solution comprises
   - a viscoelastic resin comprising from 40 to 70 weight percent of the coating
   - an aqueous based fluoropolymer comprising up to 40 weight percent of the coating, and
   - blocked isocyanate comprising from 10 to 20 weight percent of the coating.
(b) removing water to a level such that the amount remaining is no greater than 3 percent by weight of the coated composite weight, and
(c) consolidating the coated composite under heat and pressure to further impregnate the coating into the yarn.

The same process applies if the optional fourth and/or fifth coating components are present.

The fabric may be coated by immersion in a resin dispersion bath followed by metering off the desired amount of resin using metering rolls and then removing water in an oven. An alternative method is to coat the desired amount resin solution onto the surface of the composite by a method such as knife over roll coating followed by water removal. These and other suitable processes are well known in the materials coating industries. Preferably the residual moisture in the coated composite is no greater than 4 weight percent, more preferably no greater than 2 weight percent and most preferably no greater than 0.5 weight percent. In some embodiments, water comprises from 50 to 95 weight percent of the coating solution. The dried coated composite is then further consolidated under heat and pressure to further impregnate the coating into the yarns. This may be achieved via a hot calendaring, pressing or similar process. The specific values for heat and pressure need to be determined for each material combination. Typically, the temperature is in the range of from 90 to 300 degrees C, preferably from 100 to 200 degrees C and the pressure in the range of from 1 to 100 bars, preferably from 5 to 80 bars. Preferably the temperature and pressure time are sufficient to permit adequate cross-linking of the isocyanate component with the fluoropolymer.

### Uses of the Composite

A ballistic resistant soft body armor article can be produced by combining a plurality of composites as described in the above embodiments. Examples of soft armor include protective apparel such as vests or jackets that protect body parts from projectiles. It is preferable that the composites are positioned in the article in such a way as to maintain the offset yarn alignment throughout the finished assembly. For example, the second composite of the article is placed on top of the first composite in such a way that the orientation of the yarns comprising the bottom layer of the second composite is offset with respect to the orientation of the yarns comprising the adjacent top layer of the first composite. The actual number of composites used will vary according to the design needs of each article being made. As an example, an assembly for an antiballistic vest pack typically has a total areal density of between 3.0 to 7.0 kg/m². Thus the number of composites will be selected to meet this weight target with the number typically being from 5 to 25. Other components such as foam may also be incorporated into the armor article.

### TEST METHODS

The following test methods were used in the following Examples.

Linear Density: The linear density of a yarn or fiber was determined by weighing a known length of the yarn or fiber based on the procedures described in ASTM D1907-97 and D885-98. Decitex or "dtex" is defined as the weight, in grams, of 10,000 meters of the yarn or fiber. Denier (d) is 9/10 times the decitex (dtex).

Yarn Mechanical Properties: The yarns to be tested were conditioned and then tensile tested based on the procedures described in ASTM D885-98. Tenacity (breaking tenacity), modulus of elasticity and elongation to break were determined by breaking yarns on an Instron® universal test machine.

Areal Density: The areal density of a unidirectional layer was determined by measuring the weight of a 10 cm x 10 cm sample of the layer. The areal density of the final article was the weight of a 10 cm x 10 cm sample of the article.

Ballistic Penetration Performance: Ballistic resistance was measured on both dry and wet samples. The wet samples were prepared by immersing the shot pack in water for 1 hour and then hanging the pack vertically for 3 minutes prior to shooting. A statistical measure of ballistic resistance performance is V₅₀ which is the average velocity at which a bullet or a fragment penetrates the armor equipment in 50% of the shots, versus non penetration of the other 50% of the shots. The parameter is measured at a zero degree angle of obliquity of the projectile path to the target. V₅₀ resistance to 9 mm and 44 magnum projectiles was tested per NIJ standard NIJ IIIA 0101.04.

A further measure of ballistic resistance performance is back face deformation (BFD). This was also determined according to NIJ IIIA 0101.04. A BFD value of 44 mm or less is deemed a pass value.

For testing against a 44 magnum projectile, each shot pack comprised 10 layers of composite plus a single layer of closed cell polyethylene foam. The foam was 3 mm thick, had an areal weight of 100 gsm and was obtained under the tradename Veolene from Pigomma, Biassomo, Italy. The shot pack was positioned with the foam next to the target. For testing against a 9 mm projectile a similar shot pack of composite and foam was used except that there were only nine layers of composite. The shot pack dimensions were 50 cm x 50 cm.

Layer Thickness and Equivalent Filament Diameter can be determined by standard electron microscopy techniques.

### EXAMPLES

The following examples are given to illustrate the invention and should not be interpreted as limiting it in any way.

In the inventive and comparative examples, the fabric of the composite comprised two unidirectional layers. The fiber used was 1000 denier KM2 from E. I. DuPont de Nemours and Company, Wilmington, DE. Each unidirectional fibrous layer had a nominal areal weight of 240 gsm. The first unidirectional layer was oriented at an angle of + 45 degrees relative to the machine direction of the composite. The second unidirectional layer was oriented at an angle of - 45 degrees relative to the machine direction of the composite.

In the inventive and comparative examples, the binding resin between the first and second unidirectional layers was polyurethane at a nominal resin weight of 35 gsm.

In the inventive and comparative examples, the binding yarn was a 32 filament yarn of 83 dtex texturized polyester.

In the inventive and comparative examples, the coating applied to the external surfaces of the first and second unidirectional layers had a nominal areal weight of 55 gsm.

### Comparative Example A

In Comparative Example A, the coating applied to the external surfaces of the first and second unidirectional layers comprised a blend of 80 weight percent polybutene and 20 weight percent polyisobutene. The percentage of water pick-up of the composite after immersion was 44 percent. The ballistic results are summarized in Table 1.

### Example 1

In Example 1, the coating applied to the external surfaces of the first and second unidirectional layers comprised three components. The first component, which was 47 weight percent of the coating was an aqueous emulsion of polybutene. The second component, which was 18 weight percent of the coating was a fluoropolymer, Phobol® CPC. The third component, which was 47 weight percent of the coating was a blocked isocyanate, Phobol® XAN. The percentage of water pick-up of the composite after immersion was 8.2 percent. The ballistic results are summarized in Table 1.

### Example 2

Example 2 was similar to Example 1 except that the relative weights of the first, second and third components were 67, 22 and 11 weight percent respectively. The percentage of water pick-up of the composite after immersion was 8.1 percent. The ballistic results are summarized in Table 1.

### Example 3

In Example 3, the coating applied to the external surfaces of the first and second unidirectional layers comprised four components. The first component, which was 44 weight percent of the coating was an aqueous emulsion of polybutene. The second component, which was 33 weight percent of the coating was a fluoropolymer, Phobol® CPS. The third component, which was 16 weight percent of the coating was a blocked isocyanate, Phobol® XAN. The fourth component, which was 6 weight percent of the coating was a fluorine free hydrophobic aqueous resin, Phobotex® RSH. The percentage of water pick-up of the composite after immersion was 8.4 percent. The ballistic results are summarized in Table 1.

**Table 1**

| | Comp. A | Ex. 1 | Ex. 2 | Ex. 3 |
|---|---|---|---|---|
| 44 mag V₅₀ dry (m/s) | 500 | 505 | 510 | 504 |
| 44 mag V₅₀ wet (m/s) | 370 | 483 | 480 | 482 |
| 44 mag V₅₀retention (%) | 74 | 96 | 94 | 96 |
| 44 mag BFDdry (mm) | 38 | 35 | 35 | 38 |
| 44 mag BFDwet (mm) | ND | 39 | 40 | 42 |
| 9mm V₅₀ dry (m/s) | 502 | 490 | 473 | 508 |
| 9mm V₅₀ wet (m/s) | 396 | 472 | 447 | 488 |
| 9mm V₅₀retention (%) | 79 | 96 | 95 | 96 |

| | | | | |
|---|---|---|---|---|
| ND = not determined | | | | |

The results for Examples 1 to 3 show a wet strength V₅₀ retention of at least 96 percent of the dry strength in comparison with Comparative Example A where the wet strength V₅₀ retention is less than 80 percent of the dry strength. All Back Face Deformation results were acceptable. Examples 1 to 3 also had a water pick-up of less than 10 weight percent of the composite when compared with Comparative Example A where the water pick-up was over 40 weight percent.

## Claims

1. A composite useful in a ballistic resistant armor article, comprising:
(a) from 70.0 to 90.0 weight percent of a first unidirectional layer comprising aromatic polyamide yarns or aromatic copolyamide yarns comprising continuous filaments, yarns arranged parallel with each other plus a second unidirectional layer comprising aromatic polyamide yarns or aromatic copolyamide yarns comprising continuous filaments, the yarns arranged parallel with each other, the yarns of the first layer having an orientation in a direction that is different from the orientation of the yarns in the second layer, wherein the yarns have a yarn tenacity of 10 to 65 grams per dtex and an elongation at break of 3.0 to 5.0 percent,
(b) from 3.0 to 12.0 weight percent of a thermoset or thermoplastic binding resin positioned between the first and second unidirectional layers and coating at least portions of internal surfaces of the first plurality and the second plurality of yarns and filling some space between the filaments in the first plurality and the second plurality of yarns in the region of the interface between the two layers, and
(c) from 6.0 to 10.0 weight percent of a coating on at least portions of external surfaces of the first plurality and the second plurality of yarns and filling some space between the filaments in the first plurality and the second plurality of yarns,
wherein
(i) the weight percentages of (a), (b) and (c) are expressed relative to the total weight of the composite,
(ii) a ratio of a maximum thickness of the first or second layer to an equivalent diameter of the filaments in the first or second layer, respectively, is at least 13, and
(iii) the coating comprises
• a viscoelastic resin comprising from 40 to 70 weight percent of the coating
• an aqueous based fluoropolymer comprising up to 40 weight percent of the coating, and
• a blocked isocyanate comprising from 10 to 20 weight percent of the coating.

2. The composite of claim 1 additionally comprising:
(d) at least one binding yarn binding the first and second layers together, the binding yarn being transverse to the plane of the first and second layers.

3. The composite of claim 2, wherein the coating additionally comprises
• a fluorine free hydrophobic resin comprising from 0 to 8 weight percent of the coating.

4. The composite of claim 2 or 3, wherein the coating additionally comprises
• a polyglycol ether sulfate comprising less than 2 weight percent of the coating.

5. The composite of any one of claims 1 to 4, wherein the yarns have a tenacity of 20 to 40 grams per dtex.

6. The composite of any one of claims 1 to 5, wherein the fluoropolymer component of the coating has a perfluorinated side chain having a chain length of C₆.

7. The composite of any one of claims 1 to 6, wherein the modulus of elasticity of the first and second plurality of yarns is from 100 to 3500 grams per dtex.

8. The composite of any one of claims 1 to 7, wherein the aromatic polyamide is p-aramid.

9. The composite of any one of claims 1 to 8, wherein the viscoelastic resin is polybutene.

10. The composite of any one of claims 2 to 9, wherein the at least one binding yarn comprises a plurality of filaments wherein the filaments are polyester filaments, polyethylene filaments, polyamide filaments, aramid filaments, polyareneazole filaments, polypyridazole filaments, polybenzazole filaments, or mixtures thereof.

11. The composite of any one of claims 1 to 10, wherein the binding resin is polyurethane.

12. The composite of any one of claims 1 to11, wherein the binding resin comprises from 7.0 to 9.0 weight percent of the composite.

13. A ballistic resistant armor article, comprising a plurality of the composites of any one of claims 1 to 12.

14. The use of the article of claim 13 as a component in soft body armor.

## Patentansprüche

1. Verbundstoff, der in einem kugelsicheren Panzerungsartikel nützlich ist, umfassend:
(a) 70,0 bis 90,0 Gewichtsprozent einer ersten unidirektionalen Schicht umfassend aromatische Polyamidgarne oder aromatische Copolyamidgarne umfassend kontinuierliche Filamente, Garne, die parallel zueinander angeordnet sind, plus eine zweite unidirektionale Schicht umfassend aromatische Polyamidgarne oder aromatische Copolyamidgarne umfassend kontinuierliche Filamente, wobei die Garne parallel zueinander angeordnet sind, die Garne der ersten Schicht eine Orientierung in einer Richtung aufweisen, die von der Orientierung der Garne in der zweiten Schicht verschieden ist, wobei die Garne eine Garnreißfestigkeit von 10 bis 65 Gramm pro dtex und eine Bruchdehnung von 3,0 bis 5,0 Prozent aufweisen,
(b) 3,0 bis 12,0 Gewichtsprozent eines Duroplast- oder Thermoplast-Bindungsharzes, das zwischen der ersten und der zweiten unidirektionalen Schicht positioniert ist und mindestens Teile der Innenflächen der ersten Vielzahl und der zweiten Vielzahl von Garnen beschichtet und irgendeinen Raum zwischen den Filamenten in der ersten Vielzahl und der zweiten Vielzahl von Garnen in der Region der Grenzfläche zwischen den beiden Schichten füllt und
(c) 6,0 bis 10,0 Gewichtsprozent einer Beschichtung auf mindestens Teilen von Außenflächen der ersten und der zweiten Vielzahl von Garnen und irgendeinen Raum zwischen den Filamenten in der ersten Vielzahl und der zweiten Vielzahl von Garnen füllend,
wobei
(i) die Gewichtsprozentsätze von (a), (b) und (c) mit Bezug auf das Gesamtgewicht des Verbundstoffs ausgedrückt sind,
(ii) ein Verhältnis einer maximalen Dicke der ersten oder zweiten Schicht zu einem äquivalenten Durchmesser der Filamente in der ersten bzw. der zweiten Schicht mindestens 13 beträgt und
(iii) die Beschichtung Folgendes umfasst
• ein viskoelastisches Harz umfassend 40 bis 70 Gewichtsprozent der Beschichtung
• ein Fluorpolymer auf Wasserbasis umfassend bis zu 40 Gewichtsprozent der Beschichtung und
• ein geblocktes Isocyanat umfassend 10 bis 20 Gewichtsprozent der Beschichtung.

2. Verbundstoff nach Anspruch 1, zusätzlich Folgendes umfassend:
(d) mindestens ein Bindungsgarn, das die erste und die zweite Schicht zusammenbindet, wobei das Bindungsgarn querlaufend zu der Ebene der ersten und der zweiten Schicht ist.

3. Verbundstoff nach Anspruch 2, wobei die Beschichtung zusätzlich
• ein fluorfreies hydrophobes Harz, das 0 bis 8 Gewichtsprozent der Beschichtung umfasst, umfasst.

4. Verbundstoff nach Anspruch 2 oder 3, wobei die Beschichtung zusätzlich
• ein Polyglycolethersulfat, das weniger als 2 Gewichtsprozent der Beschichtung umfasst, umfasst.

5. Verbundstoff nach irgendeinem der Ansprüche 1 bis 4, wobei die Garne eine Reißfestigkeit von 20 bis 40 Gramm pro dtex aufweisen.

6. Verbundstoff nach irgendeinem der Ansprüche 1 bis 5, wobei die Fluorpolymerkomponente der Beschichtung eine perfluorierte Seitenkette aufweist, die eine Kettenlänge von C₆ aufweist.

7. Verbundstoff nach irgendeinem der Ansprüche 1 bis 6, wobei der Elastizitätsmodul der ersten und der zweiten Vielzahl von Garnen 100 bis 3500 Gramm pro dtex beträgt.

8. Verbundstoff nach irgendeinem der Ansprüche 1 bis 7, wobei das aromatische Polyamid p-Aramid ist.

9. Verbundstoff nach irgendeinem der Ansprüche 1 bis 8, wobei das viskoelastische Harz Polybuten ist.

10. Verbundstoff nach einem der Ansprüche 2 bis 9, wobei das mindestens eine Bindungsgarn eine Vielzahl von Filamenten umfasst, wobei die Filamente Polyesterfilamente, Polyethylenfilamente, Polyamidfilamente, Aramidfilamente, Polyarenazolfilamente, Polypyridazolfilamente, Polybenzazolfilamente oder Mischungen davon sind.

11. Verbundstoff nach irgendeinem der Ansprüche 1 bis 10, wobei das Bindungsharz Polyurethan ist.

12. Verbundstoff nach irgendeinem der Ansprüche 1 bis 11, wobei das Bindungsharz 7,0 bis 9,0 Gewichtsprozent des Verbundstoffs umfasst.

13. Kugelsicherer Panzerungsartikel umfassend eine Vielzahl der Verbundstoffe nach irgendeinem der Ansprüche 1 bis 12.

14. Verwendung des Artikels nach Anspruch 13 als Komponente in einer weichen Körperpanzerung.

## Revendications

1. Composite utile dans un article de protection pare-balles, comprenant:
(a) de 70,0 à 90,0 pour cent en poids d'une première couche unidirectionnelle comprenant des fils de polyamide aromatique ou des fils de copolyamide aromatique comprenant des filaments continus, les fils disposés parallèles les uns par rapport aux autres plus une seconde couche unidirectionnelle comprenant des fils de polyamide aromatique ou des fils de copolyamide aromatique comprenant des filaments continus, les fils disposés parallèles les uns par rapport aux autres, les fils de la première couche ayant une orientation dans un sens qui est différente de l'orientation des fils dans la seconde couche, les fils ayant une ténacité de fil de 10 à 65 grammes par dtex et un allongement à la rupture de 3,0 à 5,0 pour cent,
(b) de 3,0 à 12,0 pour cent en poids d'une résine de liaison thermodurcissable ou thermoplastique positionnée entre la première et la seconde couche unidirectionnelle et le revêtement d'au moins des parties des surfaces internes de la première pluralité et de la seconde pluralité des fils et le remplissage de certains espaces entre les filaments dans la première pluralité et la seconde pluralité des fils dans la région de l'interface entre les deux couches, et
(c) de 6,0 à 10,0 pour cent en poids d'un revêtement sur au moins les parties des surfaces externes de la première pluralité et de la seconde pluralité des fils et le remplissage de certains espaces entre les filaments dans la première pluralité et la seconde pluralité des fils,
où
(i) les pourcentages en poids de (a), (b) et (c) sont exprimés par rapport au poids total du composite,
(ii) un rapport d'une épaisseur maximale de la première ou de la seconde couche à un diamètre équivalent des filaments dans la première ou la seconde couche, respectivement, est d'au moins 13, et
(iii) le revêtement comprend
• une résine viscoélastique comprenant de 40 à 70 pour cent en poids du revêtement
• un polymère fluoré à base aqueuse comprenant jusqu'à 40 pour cent en poids du revêtement, et
• un isocyanate bloqué comprenant de 10 à 20 pour cent en poids du revêtement.

2. Composite selon la revendication 1 comprenant additionnellement:
(d) au moins un fil de liaison liant la première et la seconde couche ensemble, le fil de liaison étant transversal au plan de la première et de la seconde couche.

3. Composite selon la revendication 2, le revêtement comprenant additionnellement
• une résine hydrophobe sans fluor comprenant de 0 à 8 pour cent en poids du revêtement.

4. Composite selon les revendications 2 ou 3, le revêtement comprenant additionnellement
• un sulfate de poly(éther de glycol) comprenant moins de 2 pour cent en poids du revêtement.

5. Composite selon l'une quelconque des revendications 1 à 4, les fils ayant une ténacité de 20 à 40 grammes par dtex.

6. Composite selon l'une quelconque des revendications 1 à 5, le composant polymère fluoré du revêtement ayant une chaîne latérale perfluorée d'une longueur de chaîne de type C₆.

7. Composite selon l'une quelconque des revendications 1 à 6, le module d'élasticité de la première et de la seconde pluralité des fils étant de 100 à 3500 grammes par dtex.

8. Composite selon l'une quelconque des revendications 1 à 7, le polyamide aromatique étant le *p*-aramide.

9. Composite selon l'une quelconque des revendications 1 à 8, la résine viscoélastique étant le polybutène.

10. Composite selon l'une quelconque des revendications 2 à 9, ledit fil de liaison comprenant une pluralité de filaments, les filaments étant des filaments de polyester, des filaments de polyéthylène, des filaments de polyamide, des filaments d'aramide, des filaments de polyarèneazole, des filaments de polypyridazole, des filaments de polybenzazole, ou leurs mélanges.

11. Composite selon l'une quelconque des revendications 1 à 10, la résine de liaison étant le polyuréthane.

12. Composite selon l'une quelconque des revendications 1 à 11, la résine de liaison comprenant de 7,0 à 9,0 pour cent en poids du composite.

13. Article de protection pare-balles, comprenant une pluralité des composites selon l'une quelconque des revendications 1 à 12.

14. Utilisation de l'article selon la revendication 13 comme composant dans une protection corporelle souple.
